(19) Europäisches Patentamt
European Patent Office
Office européen des brevets

(11) Veröffentlichungsnummer: **0 266 729 B1**

(12) # EUROPÄISCHE PATENTSCHRIFT

(45) Veröffentlichungstag der Patentschrift: **11.09.91**

(51) Int. Cl.[5]: **C08L 83/06**, C08J 3/02, //(C08L83/06,C08K5:00), (C08L83/06,83:04,C08K5:00)

(21) Anmeldenummer: **87116117.0**

(22) Anmeldetag: **02.11.87**

(54) **Wässrige Silicondispersionen.**

(30) Priorität: **06.11.86 DE 3637836**

(43) Veröffentlichungstag der Anmeldung: **11.05.88 Patentblatt 88/19**

(45) Bekanntmachung des Hinweises auf die Patenterteilung: **11.09.91 Patentblatt 91/37**

(84) Benannte Vertragsstaaten: **AT BE CH DE ES FR GB IT LI NL SE**

(56) Entgegenhaltungen:
**EP-A- 0 119 093**
**DE-A- 3 029 789**
**DE-C- 886 075**

**WALTER NOLL: "Chemie und Technologie der Silicone", 2. Auflage, 1968, VERLAG CHEMIE, Weinheim**

(73) Patentinhaber: **WACKER-CHEMIE GMBH**
**Prinzregentenstrasse 22**
**W-8000 München 22(DE)**

(72) Erfinder: **Gamon, Norbert, Dr. Dipl.-Chem.**
**Im Domherrenfeld 1**
**W-2105 Seevetal 11(DE)**
Erfinder: **Braunsperger, Karl**
**Unterhadermark 86**
**W-8263 Burghausen(DE)**
Erfinder: **Schneider, Otto, Dr. Dipl.-Chem.**
**Stegerwaldstrasse 5**
**W-8263 Burghausen(DE)**

EP 0 266 729 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Silicondispersionen auf der Grundlage von α,ω-Dihydroxypolyorganosiloxanen, Siliconat(en) und (Organo)metallverbindung(en) als Kondensationskatalysator(en), wobei die genannten Silicondispersionen nach Verdampfen des Lösungsmittelanteils zu Elastomeren aushärten können.

Aus US 4,221,688 (ausgegeben am 9. September 1980, R.D. Johnson et al., Dow Corning Corporation) ist es bekannt, wäßrige Silicondispersionen auf der Basis von hydroxyliertem Polydiorganosiloxan, colloidalem Siliciumdioxid und einem organischen Amin oder Natriumhydroxid herzustellen. Diese Dispersionen sind im pH-Bereich von 9 bis 11.5 lagerstabil und sind nach einer Lagerung von mindestens 1 bis 3 Tagen gebrauchsfertig. In DE-A 30 29 789 (offengelegt am 19. Februar 1981 (entspricht US-Anmeldung Nr. 64 152 vom 6. August 1979), J.C. Saam, Dow Corning Corporation) sind wäßrige Silicondispersionen beschrieben, die durch Zugabe von Alkalisilicat zu einer anionisch stabilisierten wäßrigen Emulsion von Hydroxylendgruppen aufweisendem Polydiorganosiloxan erhältlich sind. Die gemäß den Beispielen hergestellten Dispersionen besitzen pH-Werte im Bereich von 10.1 bis 11.2.

Aufgabe der Erfindung war es, wäßrige Silicondispersionen herzustellen, die ohne lange Lagerung gebrauchsfertig sind. Des weiteren war es die Aufgabe der vorliegenden Erfindung, wäßrige Silicondispersionen herzustellen, die auch bei niedrigeren pH-Bereichen, beispielsweise um den Neutralpunkt, stabil sind. Ferner war es Aufgabe der vorliegenden Erfindung, wäßrige Beschichtunssysteme und Dichtmassen auf Siliconbasis zu entwickeln, welche nach dem Abdampfen des Wassers zu Elastomeren aushärten, wobei die elastomeren Beschichtungen oder Dichtmassen gut auf dem Untergrund haften, auf den sie vor ihrer Aushärtung aufgebracht wurden.

Diese Aufgaben werden durch die vorliegende Erfindung dadurch gelöst, daß wäßrige Dispersionen bereitet werden, die herstellbar sind unter Verwendung der Ausgangsstoffe

a) in den endständigen Einheiten Hydroxylgruppen aufweisende Polydiorganosiloxane

b) (Organo)metallverbindung(en)

dadurch gekennzeichnet,

daß zusätzlich als Ausgangsstoff mindestens ein

c) Siliconat

verwendet wird.

Vorzugsweise wird in den erfindungsgemäßen Dispersionen zusätzlich als Ausgangsstoff

d) Siliconharz

verwendet.

Die als Ausgangsstoffe für die erfindungsgemäßen Dispersionen verwendbaren, in den endständigen Einheiten Hydroxylgruppen aufweisenden Polydiorganosiloxane sind insbesondere solche der Formel

$$HO-[SiR_2O]_n-H \qquad (I),$$

worin

R gleiche oder verschiedene Kohlenwasserstoffreste mit 1 bis 18 Kohlenstoffatomen, die gegebenenfalls durch Halogenatome, Aminogruppen, Ethergruppen, Estergruppen, Epoxygruppen, Mercaptogruppen, Cyangruppen oder (Poly)glykolreste substituiert sind, wobei letztere aus Oxyethylen- und/oder Oxypropyleneinheiten aufgebaut sind,

n eine ganze Zahl von mindestens 200 bedeuten.

Die Polydiorganosiloxane gemäß Formel I werden entweder direkt emulgiert oder erst in der Emulsion hergestellt, durch Polymerisation bzw. Kondensation niedermolekularer cyclischer bzw. linearer, hydroxyendständiger Polyorganosiloxane. Diese Verfahren sind in der Fachwelt bekannt. Obwohl durch obige Formel nicht angegeben können in Formel (I) als mehr oder minder schwer vermeidbare Verunreinigungen bis zu 10 % der Siloxaneinheiten durch Einheiten der Formeln $R_3SiO_{1/2}$, $RSiO_{3/2}$ ersetzt sein, wobei R die oben angegebene Bedeutung hat.

Beispiele für Kohlenwasserstoffreste R sind Alkylreste, wie der Methyl-, Methyl-, n-Propyl-, Isopropyl-, n-Butyl-, sec.-Butyl-, t-Butyl-, n-Pentyl-, neo-Pentylrest, so-Pentylreste, Hexylreste, Heptylreste, Octylreste, Decylreste, Dodecylreste und Octadecylreste, Alkenylreste, wie der Vinyl- und der Allylrest; Arylreste, wie Phenyl- und Naphthylreste; Aralkylreste, wie der Benzylrest, α- und β-Phenylethylreste; Alkarylreste, wie o-, m- und p-Tolylreste, Xylylreste; Ararylreste, wie Biphenylylreste.

Beispiele für substituierte Kohlenwasserstoffreste R sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)-ethylrest, der 1,1,2,2-Tetrafluorethyloxypropylrest, der 1-Trifluormethyl-2,2,2-trifluorethyloxypropylrest, der Perfluor-iso-propyloxyethylrest, der Perfluor-iso-propyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest, esterfunktionelle Reste, wie der Methacryloxypropylrest; epoxyfunktionelle Reste wie der Glycidoxypropylrest; schwefelfunktionelle Reste wie der 3-Mercaptopropylrest.
Bevorzugt als Reste R sind Kohlenwasserstoffreste mit 1 bis 10 Kohlenstoffatomen.
Vorzugsweise sind mindestens 80%, insbesondere mindestens 90% der Reste R Methylreste.
Vorzugsweise ist der Durchschnittswert für die Zahl n in Formel (I) so gewählt, daß das Polydiorganosiloxan der Formel (I) eine Viskosität von mehr als 1000 mPa.s, insbesondere von mehr als 10000mPa.s, jeweils gemessen bei 25 ° C, besitzt.

Die als Ausgangsstoffe für die erfindungsgemäßen Dispersionen als Kondensationskatalysatoren verwendbaren (Organo)metallverbindungen sind insbesondere die Salze von Carbonsäuren und die Halogenide der Metalle Pb, Zn, Zr, Ti, Sb, Fe, Cd, Sn, Ba, Ca und Mn. Besonders bevorzugt sind (Organo-) zinnverbindungen von Carbonsäuren mit 1 bis 18 Kohlenstoffatomen sowie (Organo-) Zinnhalogenide, insbesondere Organozinn-Naphthenate, -octoate, -hexoate, -laurate,-acetate, -bromide und -chloride.

Beispiele für solche (Organo-)Zinnverbindungen sind Zinn(II)octoat, Dibutylzinndilaurat, Octylzinntriacetat-, Dioctylzinndioctoat, Dioctylzinndiacetat, Didecylzinndiacetat, Dibutylzinndiacetat, Dibutylzinndibromid, Dioctylzinndilaurat, Troctylzinnacetat. Ganz besonders bevorzugt sind Diorganozinndicarboxylate, insbesondere Dibutylzinndilaurat, Dioctylzinndilaurat, Dibutylzinndiacetat und Dioctylzinndiacetat.
Die als Ausgangsstoffe für die erfindungsgemäßen Dispersionen verwendbaren Siliconate sind insbesondere solche der Formel

$R'\text{-}Si(\overline{O}\overset{+}{M})_m(OH)_{3-m}$ (II),

und/oder deren durch Wasserabspaltung entstehenden Kondensationsprodukte, worin
R' alle Bedeutungen von R haben kann; vorzugsweise ist R' ein gegebenenfalls halogenierter oder aminhaltiger Kohlenwasserstoffrest mit 1 bis 10 C-Atomen, insbesondere ein Kohlenwasserstoffrest mit 1 bis 6 C-Atomen oder ein Aminoalkylrest.
m ist eine ganze oder gebrochene Zahl im Wert von 0,1 bis 3;
$\overset{+}{M}$ bedeutet ein Alkalimetallkation, eine Ammonium- oder Phosphoniumgruppe.

Beispiele für Reste R' sind die als Beispiele für die Reste R oben genannten Reste.

Beispiele für bevorzugte Reste R' sind die als Beispiele für Kohlenwasserstoffreste R oben genannten Reste - mit Ausnahme der Dodecyl-, Octadecyl-, Naphthyl- und Biphenylylreste -sowie halogenierte Reste, wie der 3,3,3-Trifluorpropylrest, Hexafluorpropylreste, der 1-Trifluormethyl-2,2,2-trifluorethylrest, der 2-(Perfluorhexyl)ethylrest, der 3-Chlorpropylrest und aminosubstituierte Reste. Beispiele für insbesonders bevorzugte Reste R' sind Alkylreste, wie der Methyl-, Ethyl-, n-Propyl-, Isopropyl-, n-Butyl-, sec.-Butyl-, t-Butyl-, n-Hexylrest, sowie andere Hexylreste; Alkenylreste, wie der Vinyl- und der Allylrest; sowie der Phenylrest: der N-(2-Aminoethyl)-3-aminopropylrest, der 3-Aminopropylrest und der 3-(Cyclohexylamino) propylrest.

Vorzugsweise hat die Zahl m einen Wert von 0,5 bis 3 insbesondere von 1 bis 3.

Beispiele für Reste M sind die Kationen der Alkalimetalle, wie die von Lithium, Natrium, Kalium, Rubidium, und Cäsium, sowie Reste der Formel

$\oplus NR''_4$ (III) oder

$\oplus PR''_4$ (IV) ,

wobei
R" gleiche oder verschiedene Reste, nämlich Kohlenwasserstoffreste mit 1 bis 6 C-Atomen bedeuten.
Als Reste M bevorzugt sind $Na^+$, $K^+$ und $NR_4\oplus$ . .
Es kann eine Art von Siliconat, es kann auch ein Gemisch von mindestens zwei solcher Siliconate eingesetzt werden.

Die erfindungsgemäßen Dispersionen werden im allgemeinen durch Emulgatoren stabilisiert. Es können kationaktive, anionaktive, ampholytische sowie nichtionische Emulgatoren verwendet werden. Diese Emulgatoren sowie deren Dosierung sind dem Fachmann hinreichend bekannt. Es kann eine Art von Emulgator, bespielsweise ein anionaktiver, es können auch Gemische von mindestens zwei Arten von Emulgatoren verwendet werden, beispielsweise ein Gemisch aus mindestens einem anionaktiven mit mindestens einem nichtionischem Emulgator. Die Emulgatoren können als solche der zu dispergierenden bzw. als Dispersion

zu stabilisierenden Mischung zugegeben werden, sie können auch aus einem Vorläufer, beispielsweise der entsprechenden Säure, Base oder eines Salzes des eigentlichen Emulgators in der zu dispergierenden bzw. als Dispersion zu stabilisierenden Mischung durch chemische Reaktion(en) gebildet werden.

Vorzugsweise ist zumindestens ein anionaktiver Emulgator in der erfindungsgemäßen Dispersion zugegen.

Die anionaktiven Emulgatoren sind vorzugsweise die Salze der bei der Emulsionspolymerisation zur Ausbildung in den endständigen Einheiten Hydroxylgruppen aufweisenden Diorganosiloxans verwendeten oberflächenaktiven Sulfonsäuren nach US-PS 3 294 725, wo die oberflächenaktiven Sulfonsäuren und Salze davon angegeben sind. Die Alkali- oder Ammoniumsalze der Sulfonsäuren sind bevorzugt, insbesondere die Kaliumsalze. Als Beispiele für die Sulfonsäuren seien aliphatisch substituierte Benzolsulfonsäuren, aliphatisch substituierte Naphthalinsulfonsäuren, aliphatische Sulfonsäuren, Silylalkylsulfonsäuren und aliphatisch substituierte Diphenylethersulfonsäuren genannt. Auch andere anionsche Emulgiermittel können verwendet werden, beispielsweise Alkalisulforizinoleate, sulfonierte Glycerinester von Fettsäuren, Salze von sulfonierten einwertigen Alkoholestern, Amide von Aminosulfonsäuren, beispielsweise das Natriumsalz von Oleylmethyltaurid, Alkalisalze von sulfonierten aromatischen Kohlenwasserstoffen, wie Natrium-alpha-naphthalin-monosulfonat, Kondensationsprodukte von Naphthalinsulfonsäuren mit Formaldehyd und Sulfate, wie Ammoniumlaurylsulfat, Triethanolaminlaurylsulfat und Natrium-laurylethersulfat.

Nichtionische Emulgatoren werden vorzugsweise zusätzlich zu anionaktivem Emulgator verwendet. Beispiele für derartige nichtionische Emulgatoren sind Saponine, Additionsprodukte von Fettsäuren mit Ethylenoxid, wie Dodecansäureester mit Tetraethylenoxid, Additionsprodukte von Ethylenoxid mit Sorbitantrioleat, Additionsprodukte von phenolischen Verbindungen mit Seitenketten mit Ethylenoxid, wie Additionsprodukte von Ethylenoxid mit Isododecylphenol, und Iminderivate, wie polymerisiertes Ethylenimin, Additionsprodukte von Alkoholen mit Ethylenoxid, wie Polyethylenglykol-(10)-isotridecylether.

Beispiele für kationaktive Emulgatoren sind Fettamine quaternäre Ammoniumverbindungen, quaternäre Verbindungen des Pyridins, Morpholins und Imidazolins.

Beispiele für ampholytische Emulgatoren sind langkettige substituierte Aminosäuren, wie N-Alkyl-di-(aminoethyl-)glycin, N-alkyl-2-aminopropionat, sowie Betaine, wie (3-Acylaminopropyl)-dimethylglycin und Alkylimidazoliumbetaine.

Obwohl für die Lösung der eingangs gestellten Aufgaben der Erfindung nicht erforderlich, können und vorzugsweise sollen in den erfindungsgemäßen Dispersionen zusätzlich zu den oben genannten Komponenten als Ausgangsstoff ein Siliconharz verwendet werden. Der Zusatz von Siliconharz verbessert die Festigkeit des aus den erfindungsgemäßen Dispersionen nach Verdampfen des Lösungsmittelanteils erhältlichen Elastomeren.

Vorzugsweise werden als Siliconharze solche mit Einheiten der Formel

$$R''_xSiO_{\frac{4-x}{2}} \quad (V),$$

bevorzugt, worin

R″ dieselbe Bedeutung wie in den Formeln (III) und (IV) besitzt, und

$\bar{x}$ eine Zahl mit einem durchschnittlichen Wert von 0,5 bis 1,6 insbesondere von 0,75 bis 1,4 bedeutet.

Obwohl durch die obige Formel (V) nicht ausgedrückt, kann das Siliconharz bedingt durch seine Herstellung bis zu 10 Gew.-% Si-gebundene Hydroxylgruppen und/oder Alkoxygruppen enthalten.

Bevorzugte Reste R″ in Formel (V) sind Methyl-, Ethyl-, Vinyl-und Phenylreste, insbesondere Methylreste.

Vorzugsweise werden bei der Herstellung der erfindungsgemässen Dispersion, bezogen auf 100 Gewichtsteile in den endständigen Einheiten Hydroxylgruppen aufweisende Polydiorganosiloxane 0,01 bis 20, insbesondere 0,5 bis 6 Gewichtsteile, Siliconat; 0,01 bis 10, insbesondere 0,15 bis 7 Gewichtsteile (Organo)metallverbindung(en), sowie 0 bis 150, insbesondere 0 bis 70 Gewichtsteile Siliconharz eingesetzt.

Die für die Stabilisierung der erfindungsgemäßen Dispersionen vorteilhafte Menge an Emulgator ist stark von der Zusammensetzung der jeweiligen Dispersion abhängig. Bezogen auf das Gewicht der Dispersion mit Ausnahme des Wasseranteils genügen im allgemeinen 1 bis 20 Gewichtsprozent an Emulgator(en).

Die erfindungsgemäßen Silicondispersion können zusätzliche Bestandteile zur Modifizierung der Eigenschaften der dispersionen, bzw. der aus diesen erhaltenen elastomeren Produkte enthalten. Zur Verbesserung der Haftung der aus den erfindungsgemäßen Dispersionen nach Verdampfung ihrer Lösungsmittelanteile auf dem Untergrund, auf dem die Dispersionen aufgebracht worden sind, können Haftvermittler zugesetzt werden. Als besonders vorteilhaft in dieser Hinsicht erwies sich der Einsatz von aminofunktionellen Silanen, wie N-(2-Aminoethyl)-3- aminopropyltrialkoxysilanen,bei denen der Alkoxyrest ein Methoxy-, Ethoxy-, n-Propoxy- oder Isopropoxyrest ist.

Weitere Stoffe, die in den erfindungsgemäßen Dispersionen enthalten sein können, sind Weichmacher, wie $\alpha,\omega$-Trimethylsiloxypolydimethylsiloxan, Schaumverhütungsmittel, organische Lösungsmittel, Thixotropier- und Dispergiermittel sowie Füllstoffe. Beispiele für Thixotropiermittel sind Carboxymethylcellulose und Polyvinylalkohol. Beispiele für Dispergiermittel sind Polyacrylsäuresalze und Polyphosphate. Die genannten Thixotropier- und Dispergiermittel haben teilweise auch emulgierende Eigenschaften, so daß sie als Emulgatoren benutzt werden können. Beispiele für organische Lösungsmittel sind Kohlenwasserstoffe, wie Petrolether verschiedener Siedebereiche, n-Pentan, n-Hexan, Hexan-Isomerengemisch, Toluol, Xylol; organische Lösungsmittel werden vorzugsweise höchstens zu 5 Gew.-%, bezogen auf das Gewicht der Dispersion, insbesondere garnicht, eingesetzt. Beispiele für Füllstoffe sind verstärkende Füllstoffe, also Füllstoffe mit einer BET-Oberfläche von mindestens 50 $m^2/g$, wie pyrogen hergestellte Kieselsäure, gefällte Kieselsäure, Aluminiumoxid und Ruß; nicht verstärkende Füllstoffe, also Füllstoffe mit einer BET (Brunauer, Emmet und Teller)-Oberfläche von weniger als 50 $m^2/g$, wie Ton, Quarzmehl, Kreide, Glimmer, Zinkoxid, Titandioxid u.a. mehr. Füllstoffe werden höchstens in Mengen von 150 Gewichtsteilen, bezogen auf 100 Gewichtsteile, in den endständigen Einheiten Hydroxylgruppen aufweisendes Organopolysiloxan verwendet.

Von jeder der vorstehend als mögliche Komponenten in den bzw. als Ausgangsstoffe für die erfindungsgemäßen Dispersion genannten Gruppen von Stoffen kann jeweils als eine Komponente ein Stoff dieser Gruppe, es kann aber auch ein Gemisch aus mindestens zwei verschiedenen dieser Stoffe verwendet werden. So kann beispielsweise ein Gemisch aus mindestens zwei in den endständigen Einheiten Hydroxylgruppen aufweisenden Organopolysiloxanen eingesetzt werden.

Die erfindungsgemäßen Dispersionen besitzen vorzugsweise pH-Werte von 5 bis 13, insbesondere von 6 bis 11, speziell 7 bis 8,5, jeweils gemessen mittels einer in die Dispersion eingetauchten handelsüblichen Glaselektrode.

In den erfindungsgemäßen Dispersionen wurden Feststoffgehalte von über 80 Gew.-% erreicht. Als Feststoffgehalt ist hier der Gewichtsanteil aller Bestandteile der Dispersion außer Wasser und, falls verwendet, organische(s) Lösungsmittel am Gesamtgewicht der Dispersion zu verstehen. Vorzugsweise haben die erfindungsgemäßen Dispersionen Feststoffgehalte von 20 bis 85 Gewichtsprozent. Niedrigere Feststoffgehalte sind selbstverständlich möglich, jedoch wirtschaftlich wenig sinnvoll. Vorzugsweise werden die als Ausgangsstoffe für die erfindungsgemäßen Dispersionen verwendeten, in den endständigen Einheiten Hydroxylgruppen aufweisenden Polydiorganosiloxane, sowie, falls verwendet, die Siliconharze vor dem Vermischen mit den jeweils übrigen Komponenten in Wasser emulgiert bzw. dispergiert. Auch für die (Organo-) Metallverbindung(en) kann dies von Vorteil sein.

In den nachstehend beschriebenen Beispielen beziehen sich die Mengenangaben, falls nicht anders angegeben, auf das Gewicht. Als Emulgator wurde unter anderem Polyethylenglykol-(10)-isotridecylether (nachstehend als "E" bezeichnet), eingesetzt. Sofern nicht anders angegeben, wurden die nachstehenden Beispiele bei einem Druck von 0,10 MPa (abs.) und bei Raumtemperatur, also etwa 22° C, bzw. bei der Temperatur, die sich beim Zusammengeben der Reaktanden bei Raumtemperatur ohne zusätzliche Heizung oder Kühlung einstellt, durchgeführt.

A: Emulsion von in den endständigen Einheiten Hydroxylgruppen aufweisendem Polydiorganosiloxan:

1) Eine aus 1400 g eines $\alpha,\omega$-Dihydroxypolydimethylsiloxans einer Viskosität von 100 $mm^2.s^{-1}$ bei 25° C, 30 g E, 30 g Dodecylbenzolsulfonsäure und 540 g Wasser hergestellte Emulsion wurde nach 20 h Lagerung bei Raumtemperatur mit Diethylamin neutralisiert. Die Viskosität der Ölphase betrug ca. 1 000 000 $mm^2.s^{-1}$ bei 25° C.

2) Eine Emulsion gemäß 1) wurde hergestellt mit der Abänderung, daß statt mit Diethylamin mit Diethanolamin neutralisiert wurde.

3) Eine Emulsion gemäß 1) wurde hergestellt mit der Abänderung, daß statt mit Diethylamin mit 40 %-iger wäßriger Kaliummethylsiliconatlösung neutralisiert wurde.

4) Eine Emulsion gemäß 1) wurde hergestellt mit der Abänderung, daß statt mit Diethylamin mit 50 gew.%iger wäßriger KOH-Lösung neutralisiert wurde.

B: Dispersion von (Organo-)Metallverbindung :

Aus 50 g Dibutylzinndilaurat, 5 g E und 45 g Wasser wurde eine Emulsion hergestellt.

C: Siliconharzdispersion:

Eine aus 50 g eines aus Einheiten der Formel $CH_3SiO_{3/2}$ bestehenden niedermolekularen Siliconharzes, 3 g Dodecylbenzolsulfonsäuresalz und 47 g Wasser bereitete Emulsion wurde mit 1 g Dodecylbenzolsulfonsäure angesäuert und 1 Woche bei Raumtemperatur belassen und anschließend mit N-Methylethanolamin neutralisiert.

D: Weichmacheremulsion:

Aus 700 g eines α,ω-bis-Trimethylsiloxypolydimethylsiloxans einer Viskosität von 100 $mm^2.s^{-1}$ bei 25° C, 30 g E und 270 g Wasser wurde eine Emulsion bereitet.

Beispiel 1

Eine Mischung von 20 g der gemäß A 2) hergestellten Emulsion, 0,2 g der Dibutylzinndilauratemulsion B und 0,1 g einer 40 Gew.-%-igen wäßrigen Kaliummethylsiliconatlösung wurde 1 Tag lang bei Raumtemperatur gelagert. Der pH-Wert der so hergestellten Dispersion betrug 8,0. Ein Teil dieser Dispersion wurde auf eine Glasplatte aufgetragen. Innerhalb eines Tages bildete sich ein trockener, weicher Elastomerfilm, der nach 4 Tagen eine Shore-00- Härte von 46 besaß.

Beispiel 2

Beispiel 1 wurde wiederholt mit der Abänderung, daß in die Mischung zusätzlich 5 g der gemäß C hergestellten Siliconharzdispersioneingebracht wurde. Der pH-Wert der so hergegestellten Dispersion betrug 8,5. Ein Teil dieser Dispersion wurde auf eine Glasplatte aufgetragen. Innerhalb eines Tages bildete sich ein trockener, weicher Elastomerfilm, der nach 4 Tagen eine Shore-00-Härte von 52 besaß.

Beispiel 3

a) In eine durch Vermischen von 100 g der gemäß A 1) hergestellten Emulsion, 1 g der Dibutylzinndilauratemulsion B, 25 g der Siliconharzdispersion C und 0,5 g 40 Gew.-%-iger wäßriger Kaliummethylsiliconatlösung hergestellte Dispersion wurden 60 g gefällte Kreide eingetragen. Erhalten wurde eine cremige, standfeste Paste mit einem pH-Wert von 8,5, die mindestens 6 Monate bei Raumtemperatur lagerfähig war. Die Paste härtete innerhalb eines Tages nach Auftragen als Raupe oder 2 mm starke Folie zu einem trockenen Elastomer aus.

b) Die gemäß a) hergestellte Paste wurde zusätzlich mit 10 g der Weichmacheremulsion D versetzt. Der pH-Wert der so erhaltenen Paste betrug 8,0.

c) Die gemäß a) hergestellte Paste wurde zusätzlich mit 1 g N-(2-Aminoethyl)-3-aminopropyltrimethoxysilan versetzt. Der pH-Wert der so hergestellten Paste betrug 8,5. Das nach Aufbringen der Paste auf nassen Beton, rohes Holz, lasiertes Holz und viele andere Substrate ausgehärtete Elastomer besaß jeweils hervorragende Haftung auf dem jeweiligen Substrat. Die folgende Tab. 1 führt die physikalischen Eigenschaften der durch Auftragen der unter a), b) und c) hergestellten Pasten als 2 mm starke Folien erhaltenen Elastomeren nach 1-wöchiger Lagerung bei Raumtemperatur auf.

Tabelle 1

| Masse gemäß | Shore-A-Härte | Reißfestigkeit in N/mm² | Zugfestigkeit bei 100 % Dehnung in N/mm² | Reißdehnung in % | Weiterreißfestigkeit in N/mm |
|---|---|---|---|---|---|
| a) | 27 | 0,9 | 0,3 | 810 | 3,9 |
| b) | 18 | 1,0 | 0,2 | 950 | 3,6 |
| c) | 32 | 1,2 | 0,4 | 600 | 10 |

Beispiel 4

In eine durch Vermischen von 100 g der gemäß A 3) hergestellten Emulsion, 1 g der Dibutylzinndilauratemulsion B und 25 g der Siliconharzdispersion hergestellte Dispersion wurden 60 g Quarzmehl eingetragen. Erhalten wurde eine cremige, standfeste Paste mit einem pH-Wert von 6,0. Die Paste härtete innerhalb eines Tages nach Auftragen als Raupe oder 2 mm starke Folie zu einem weichen, trockenen Elastomer aus.

Vergleichsbeispiel

Beispiel 3 a) wurde wiederholt mit der Abänderung, daß statt der wäßrigen Kaliumsiliconatlösung 0,5 g Kaliumwasserglas (Feststoffgehalt 40 Gew.-%) verwendet wurde. Die Paste war einen Tag nach Auftragen als Raupe oder als 2 mm starke Folie noch nicht ausgehärtet.
Die gemäß Beispiel 3 a) und dem Vergleichsbeispiel hergestellten Pasten wurden jeweils 4 Tage nach ihrer Herstellung als Raupen auf verschiedene Substrate aufgetragen, kurz angedrückt und anschließend 9 Tage bei Raumtemperatur ausvulkanisiert. Die so hergestellten Elastomere waren jeweils ca. 10 mm breit und ca. 7 mm hoch. Zur Prüfung auf Haftung wurde versucht, die Elastomere vom Substrat abzuziehen. Die Ergebnisse sind in der folgenden Tab. 2 verzeichnet. Hierin bedeuten
"-": Adhäsionsriß (das gesamte Elastomer läßt sich vom Substrat abziehen)
"+": Kohäsionsriß (Riß innerhalb des Elastomeren).

Tabelle 2: Haftungsprüfung

| Substrat | Beispiel 3 a) | Vergleichsbeispiel |
|---|---|---|
| Beton, trocken | - | - |
| Beton, naß | + | - |
| Aluminium | + | - |
| Zinkblech | +/- | - |
| Glas | + | - |

Beispiel 5

a) Herstellung einer wäßrigen Lösung von Kalium-N-(2-aminoethyl)-3-aminopropylsiliconat:
Zu einer Lösung von 95,5 g KOH in 400 g Wasser wurden unter kräftigem Rühren 111 g N-(2-Aminoethyl)-3-aminopropyltrimethoxysilan zudosiert. Von der Mischung werden durch Erhitzen erst Methanol und dann ca. 200 ml Wasser abdestilliert. Anschließend wurde die Mischung durch Zugabe von Wasser auf 367 g Gesamtgewicht aufgefüllt. Es resultierte eine 40 %ige Siliconatlösung.
b) In eine durch Vermischen von 100 g der gemäß A 4) hergestellten Dispersion, 1 g der Dibutylzinndilauratemulsion B, 25 g der Siliconharzdispersion C und 0,5 g der gemäß a) hergestellten 40 %igen wäßrigen Kalium-N-(2-amionoethyl)-3-aminopropylsiliconatlösung hergestellte Dispersion wurden 60 g Quarzmehl eingetragen. Erhalten wurde eine cremige, standfeste Paste mit einem pH-Wert von 8,5. Die Paste härtete innerhalb eines Tages nach Auftragen als Raupe oder 2 mm starke Folie zu einem trockenem Elastomer aus.

## Patentansprüche

1. Wäßrige Silicondispersionen, herstellbar unter Verwendung der Ausgangsstoffe
   a) in den endständigen Einheiten Hydroxylgruppen aufweisende Polydiorganosiloxane
   b) (Organo)metallverbindungen
   **dadurch gekennzeichnet,**
   daß zusätzlich als Ausgangsstoff mindestens ein
   c) Siliconat der Formel

   $$R'\text{-}Si(\bar{O}\overset{+}{M})_m(OH)_{3-m} \quad (II),$$

   und/oder deren durch Wasserabspaltung entstehenden Kondensationsprodukte, worin
   R' gleiche oder verschiedene Kohlenwasserstoffreste mit 1 bis 18 Kohlenstoffatomen, die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind,
   m eine ganze oder gebrochene Zahl im Wert von 0,1 bis 3 ist;
   M ein Alkalimetallkation, eine Ammonium- oder Phosphoniumgruppe bedeutet,
   verwendet wird.

2. Wäßrige Silicondispersionen gemäß Anspruch 1,
   **dadurch gekennzeichnet,**
   daß sie zusätzlich als Ausgangsstoff
   d) Siliconharz
   enthalten.

3. Verfahren zur Herstellung von wäßrigen Silicondispersionen gemäß Anspruch 1 oder 2,
   **dadurch gekennzeichnet,**
   daß eine wäßrige Emulsion von
   a) in den endständigen Einheiten Hydroxylgruppen aufweisendem Polydiorganosiloxan mit
   b) (Organo)metallverbindungen in Substanz oder als wäßriger Dispersion und einer wäßrigen Lösung von
   c) Siliconat der Formel

   $$R'\text{-}Si(\bar{O}\overset{+}{M})_m(OH)_{3-m} \quad (II),$$

   und/oder deren durch Wasserabspaltung entstehenden Kondensationsprodukte worin
   R' gleiche oder verschiedene Kohlenwasserstoffreste mit 1 bis 18 Kohlenstoffatomen, die gegebenenfalls durch Halogenatome, Aminogruppen, Ethergruppen, Estergruppen, Epoxygruppen, Mercaptogruppen, Cyanogruppen oder (Poly)glykolreste substituiert sind, wobei letztere aus Oxyethylen- und/oder Oxypropyleneinheiten aufgebaut sind,
   m eine ganze oder gebrochene Zahl im Wert von 0,1 bis 3 ist ;
   M eine Alkalimetallkation, eine Ammonium- oder Phosphoniumgruppe bedeutet,
   sowie gegebenenfalls einer wäßrigen Dispersion von

d) Siliconharz
vermischt werden.

## Claims

1. Aqueous silicone dispersions, obtainable with the use of the starting materials
   a) polydiorganosiloxanes having hydroxyl groups in the terminal units and
   b) (organo)metal compounds,
   characterized in that additionally at least one
   c) siliconate of the formula

   $$R'\text{-}Si(\overline{O}\overset{+}{M})_m(OH)_{3-m} \quad (II),$$

   and/or condensation products thereof formed by elimination of water, wherein
   R' represents identical or different hydrocarbon radicals which have 1 to 18 carbon atoms and are unsubstituted or substituted by halogen atoms, amino groups, ether groups, ester groups, epoxy groups, mercapto groups, cyano groups or (poly)glycol radicals, the latter being built up from oxyethylene and/or oxypropylene units,
   m is a whole or fractional number having a value of 0.1 to 3, and
   M is an alkali metal cation or an ammonium or phosphonium group,
   is used as a starting material.

2. Aqueous silicone dispersions according to Claim 1, characterized in that they additionally contain
   d) a silicone resin
   as a starting material.

3. Process for the preparation of aqueous silicone dispersions according to Claim 1 or 2, characterized in that an aqueous emulsion of
   a) a polydiorganosiloxane having hydroxyl groups in the terminal units are (sic) mixed with
   b) (organo)metal compounds as such or as an aqueous dispers ion and an aqueous solution of
   c) a siliconate of the formula

   $$R'\text{-}Si(\overline{O}\overset{+}{M})_m(OH)_{3-m} \quad (II),$$

   and/or condensation products thereof formed by elimination of water,
   wherein R' represents identical or different hydrocarbon radicals which have 1 to 18 carbon atoms and are unsubstituted or substituted by halogen atoms, amino groups, ether groups, ester groups, epoxy groups, mercapto groups, cyano groups or (poly)glycol radicals, the latter being built up from oxyethylene and/or oxypropylene units,
   m is a whole or fractional number having a value of 0.1 to 3, and
   M is an alkali metal cation or an ammonium or phosphonium group,
   and, if optionally, an aqueous dispersion of
   d) a silicone resin.

## Revendications

1. Dispersions aqueuses de silicones susceptibles d'être préparées avec, comme corps de départ :
   a) des poly-diorganosiloxanes contenant des radicaux hydroxy dans les motifs terminaux,
   b) des composés (organo)métalliques,
   dispersions caractérisées en ce qu'on utilise en plus, comme corps de départ, au moins
   c) un siliconate répondant à la formule II

   $$R'\text{-}Si(\overline{O}\overset{+}{M})_m(OH)_{3-m} \quad (II)$$

   et/ou ses produits de condensation formés par enlèvement d'eau,
   formule dans laquelle
   R' représente des radicaux hydrocarbonés, identiques ou différents, qui contiennent de 1 à 18 atomes de carbone et qui portent éventuellement des atomes d'halogènes, des radicaux

amino, des radicaux éthers, des radicaux esters, des radicaux époxy, des radicaux mercapto, des radicaux cyano ou des radicaux de (poly)glycols, ces derniers étant constitués de motifs oxy-éthylènes et/ou oxypropylènes,

m désigne un nombre entier ou fractionnaire compris entre 0,1 et 3, et

M représente un cation de métal alcalin, un radical ammonium ou un radical phosphonium.

**2.** Dispersions aqueuses de silicones selon la revendication 1, caractérisées en ce qu'elles contiennent en outre, comme corps de départ :

d) une résine siliconique.

**3.** Procédé pour préparer des dispersions aqueuses de silicones selon l'une des revendications 1 et 2, procédé caractérisé en ce qu'on mélange une émulsion aqueuse

a) d'un poly-diorganosiloxane contenant des radicaux hydroxy dans les motifs terminaux, avec

b) des composés (organo)métalliques, en substance ou sous la forme d'une dispersion aqueuse, et une solution aqueuse

c) d'un siliconate répondant à la formule :

$$R'\text{-}Si(\overline{O}\overset{+}{M})_m(OH)_{3-m} \qquad (II)$$

et/ou ses produits de condensation formés par enlèvement d'eau,

formule dans laquelle

R' représente des radicaux hydrocarbonés, identiques ou différents, qui contiennent de 1 à 18 atomes de carbone et qui portent éventuellement des atomes d'halogènes, des radicaux amino, des radicaux éthers, des radicaux esters, des radicaux époxy, des radicaux mercapto, des radicaux cyano ou des radicaux de (poly)glycols, ces derniers étant constitués de motifs oxy-éthylènes et/ou oxypropylènes,

m désigne un nombre entier ou fractionnaire compris entre 0,1 et 3, et

M représente un cation de métal alcalin, un radical ammonium ou un radical phosphonium,

et éventuellement une dispersion aqueuse

d) d'une résine siliconique.